# EUROPEAN PATENT APPLICATION

(11) **EP 1 612 599 A1**
(43) Date of publication of application: **04.01.2006**
(21) Application number: 04720178.5
(22) Date of filing: 12.03.2004
(51) Int. Cl.: G03B 17/56, F16M 11/14, G01C 15/00

(54) **PANORAMA PHOTOGRAPING SUPPORT DEVICE**

(30) Priority: 14.03.2003 JP 2003070049
(71) Applicant: Apricot Co., Ltd., Tokyo 160-0023 (JP)
(72) Inventor: OSAKA, Shoji, Shinagawa-ku, Tokyo 141-0031 (JP)
(74) Representative: Epping - Hermann - Fischer
(86) International application number: PCT/JP2004/003268
(87) International publication number: WO 2004/081652

(57) **Abstract**

A tilt adjustment section (400) tiltably holds a strut (200). A weight section (500), which applies a load to the strut in the direction of gravitational force, is attached to the strut (200). The load of the weight section (500) stabilizes the strut (200) in the direction of gravitational force. The tilt adjustment section (400) fixes the strut (200) in a state where the strut (200) is stabilized in the direction of gravitational force. A head (100) is connected to the strut (200). The strut (200) is rotatably connected to the tilt adjustment section (400). Therefore, the head (100) can be rotated without tilting the strut (200).

## Description

### Technical Field

The present invention relates to a panorama photographing support device, and more particularly, to a panorama photographing support device which is suitable for making a panoramic motion picture.

### Background Art

Recently has been established a method for making a panoramic motion picture, which takes photographs all around a photographing point, connects the shot images together on a computer device, and can display the full circumference by operating a mouse or the like. In making such a panoramic motion picture, it is necessary to acquire a plurality of images showing the full circumference, but if misalignment occurs on heaven and earth, and the field angle in each image, a smooth panoramic motion picture can not be made. At the time of taking a photograph, therefore, an imaging device is fixed to a tripod or the like so as to be stable, and the imaging device is horizontally rotated to take photographs all around.

A technology relating to a tripod for supporting such a photographing is described in, for example, Japanese Patent No. 3187026. In the tripod as set forth in Japanese Patent No. 3187026, the tilt of the center of the rotational axis which supports a camera is automatically adjusted, and the camera is automatically rotated.

While such a tripod can allow a panoramic motion picture to be taken in a good condition, the structure must be complicated due to automatic tilt adjustment and automatic rotation of the camera. That is, the weights of the tripod and its accessory become heavy, and complicated assembly and disassembly works or so are involved, so that when such a tripod is carried to take a photograph outdoor, for example, the tripod has a poor usability and cannot casually used by anyone.

### Disclosure of Invention

The present invention has been made in view of the above-described situations, and it is an object of the present invention to provide a panorama photographing support device which can conveniently shoot materials for making a high-quality panoramic motion picture.

To achieve the above object, a panorama photographing support device according to the invention is characterized by comprising:
a head section which supports an imaging device;
a strut section which supports said head section; and
a leg section which supports said strut section,
characterized by further including:
   load means which apply a load to said strut section in a direction of gravitational force; and
   holding means which tiltably hold said strut section by the loading of said load means in such a way that tilt of said strut section is in the direction of gravitational force.

In the panorama photographing support device, it is desirable that the strut section and/or the holding means should further include fixing means which fix the strut section in a state where the tilting of the strut section is in the direction of gravitational force.

In the panorama photographing support device, it is desirable that the strut section should include a first strut section and a second strut section, and in this case, it is desirable that
the holding means should further include:
a connecting section which connects the first strut section and the second strut section, and rotatably holds the first strut section; and
a housing section which is fixed to the leg section and tiltably houses the connecting section.
Or,
it is desirable that the strut section and/or the holding means should further include fixing means which fix the connecting section in such a manner as to keep a state where the tilt of the strut section is in the direction of gravitational force.
And, it is desirable that
the head section should be attached to the first strut section, and
the load means should be attached to the second strut section.

In the panorama photographing support device, it is desirable that
the strut section should include a first strut section and a second strut section,
the first strut section should rotatably support the head section, and
the holding means should further include:
a connecting section which connects the first strut section and the second strut section; and
a housing section which is fixed to the leg section and tiltably houses the connecting section.
Or,
it is desirable that the strut section and/or the holding means should further include fixing means which fix the connecting section in such a manner as to keep a state where the tilt of the strut section is in the direction of gravitational force.
And, it is desirable that
the head section should be attached to the first strut section, and
the load means should be attached to the second strut section.

According to such a device, a panorama photographing like a full-circumference shooting can be carried out without causing a tilt by a very simple structure, which does not require a power source section, a drive section and the like.

### Brief Description of Drawings

FIG. 1 is a diagram illustrating the appearance of a tripod device according to the embodiment of the present invention.
FIG. 2 is a diagram illustrating the appearance of a tilt adjustment section illustrated in FIG. 1.
FIG. 3 is a cross-sectional view for explaining the structures of the tilt adjustment section and an upper strut both illustrated in FIG. 1.

### Best Mode for Carrying Out the Invention

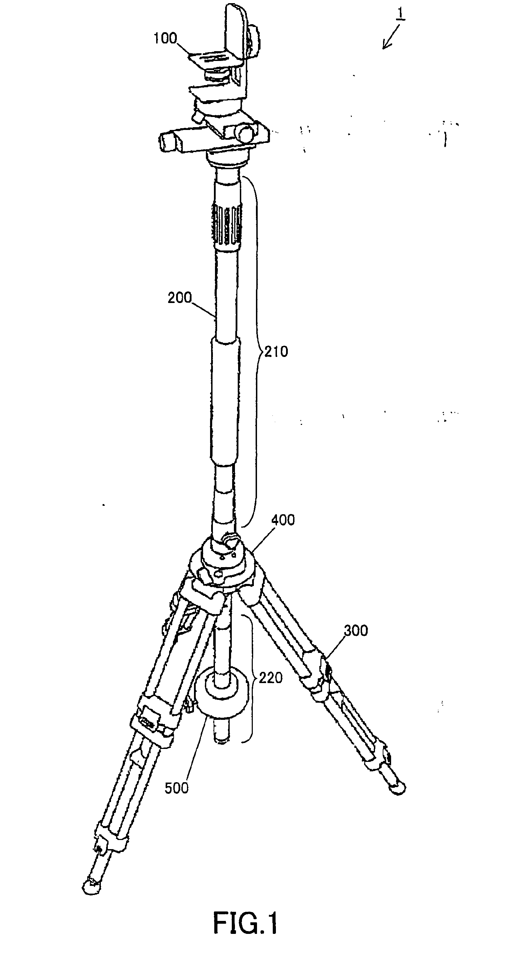

An embodiment according to the present invention will now be described with reference to the accompanying drawings. In the embodiment, regarding a panorama photographing support device of the invention, an explanation will be given a case of a tripod device illustrated in FIG. 1.

FIG. 1 is a diagram illustrating the appearance of the tripod device according to the embodiment of the present invention. As illustrated, the tripod device 1 comprises a head 100, a strut 200, a leg section 300, a tilt adjustment section 400, and a weight section 500.

The head 100 is a camera platform on which a camera (film camera, digital camera, video camera, etc) is mounted, and fixes the camera by a predetermined fixing section (like a screw). It is desirable that the head 100 should have an adjustment mechanism which adjusts the camera position in such a way that the focal position of the mounted camera is on the rotational axis of the strut 200.

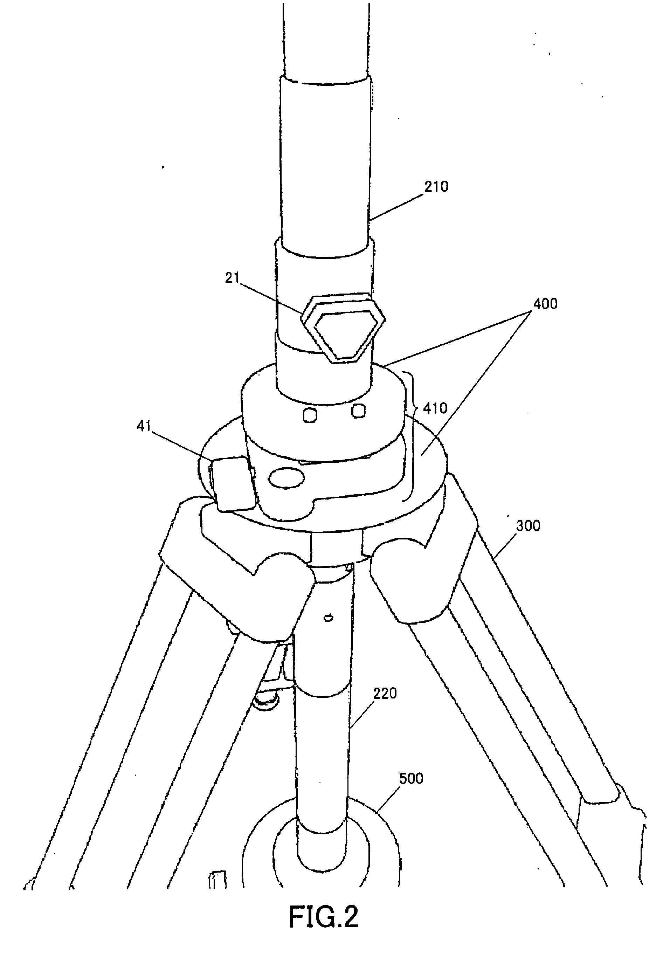

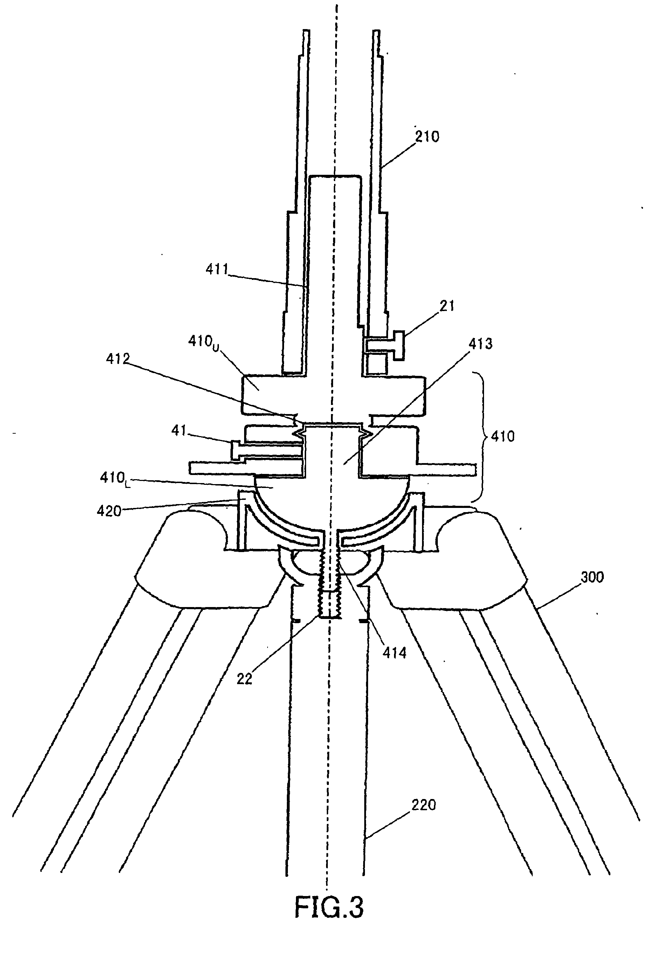

The strut 200 comprises an upper strut 210 and a lower strut 220. The upper strut 210 supports the head 100, and is rotatably connected to the upper portion of the later-described tilt adjustment section 400. In the embodiment, at least the vicinity of the lower end of the upper strut 210 is formed in a cylindrical shape to engage with the upper portion of the tilt adjustment section 400. A fixing section 21 which comprises, for example, a screw member and is illustrated in FIG. 2 and FIG. 3 is formed in the vicinity of the lower end of the upper strut 210, and, the upper end of the tilt adjustment section 400 is inserted into the cylinder of the upper strut 210 and fixed, so that the upper strut 210 is fixed to the tilt adjustment section 400.

The lower strut 220 is formed in, for example, a columnar shape, and connected to the lower portion of the tilt adjustment section 400. In the embodiment, as illustrated in FIG. 2 and FIG. 3, a recess portion 22 with a female-screw-like structure is formed in the upper surface of the lower strut 220, and the lower strut 220 is screwed in the lower portion of the tilt adjustment section 400. The later-described weight section 500 is attached to the lower strut 220.

The leg section 300 has three legs, each adjustable its length, angle, and the like, and the legs are connected at predetermined angles and intervals. That is, the leg section 300 is a tripod which can carry out a three-point support by opening three of the legs downward. The leg section 300 holds the later-described tilt adjustment section 400.

The tilt adjustment section 400 connects the upper strut 210 and the lower strut 220, and tiltably holds them. The structure of the tilt adjustment section 400 will be explained in detail later.

The weight section 500 is a weight which is detachably attached to the lower strut 220, and applies a predetermined load to the lower strut 220 to allow the longitudinal direction of the strut 200 to be in the direction of gravitational force. That is, the predetermined load is applied to the lower strut 220, to which the weight section 500 is attached, in the direction of gravitational force. In the embodiment, the weight section 500 is formed in a doughnut-like shape, engages the lower strut 220 with the central opening of the weight section 500, and is fixed by a predetermined fixing member, so that it is attached to the lower strut 220. To easily allow the strut 200 to be in the direction of gravitational force, it is desirable that the weigh section 500 should be attached to the vicinity of the lower end of the lower strut 220.

Next, the structure of the tilt adjustment section 400 will be explained with reference to FIG. 2 and FIG. 3. FIG. 2 is a diagram illustrating the appearance of the tilt adjustment section 400, and FIG. 3 is a cross-sectional view for explaining the internal structure of the tilt adjustment section 400.

As illustrated in FIG. 2, the tilt adjustment section 400 is placed on the leg section 300, and connects the leg section 300 and the strut 200. The structure of the tilt adjustment section 400 will now be explained in detail below with reference to FIG. 3.

As illustrated in FIG. 3, the tilt adjustment section 400 includes an adapter section 410, an adapter holder 420, and a rotation locking section 41.

The adapter section 410 is an adapter which connects the upper strut 210 and the lower strut 220, and also connects them to the leg section 300. The adapter section 410 is divided into an upper adapter 410_{U} and a lower adapter 410_{L}.

An upper sleeve 411 is so formed in the upper adapter 410_{U} as to protrude upward from the upper portion of the upper adapter 410_{U}. The upper sleeve 411 is inserted into the lower portion of the cylindrical upper strut 210, and fixed by the fixing section 21 comprising a screw member or the like, so that the upper adapter 410_{U} and the upper strut 210 are connected with each other.

A lower sleeve 414 with a male-screw-like structure is so formed in the lower adapter 410_{L} as to protrude downward from the lower portion of the lower adapter 410_{L}. The lower sleeve 414 is tightened (screwed) in the recess portion 22 in the upper surface of the lower strut 220, so that the lower adapter 410_{L} and the lower strut 220 are connected with each other. The upper sleeve 411, the lower sleeve 414, the upper strut 210, and the lower strut 220 are all so structured as to be centered on the axis of the strut 200.

A recess portion 412 with a circular cross-sectional surface is formed in the bottom portion of the upper adapter 410_{U}, and a protrusion 413 with a circular cross-sectional surface is formed in the upper surface of the lower adapter 410_{L}, and, the recess portion 412 and the protrusion 413 are engaged with each other, so that the adapter section 410 is formed.

The engagement of the recess portion 412 with the protrusion 413 makes the upper adapter 410_{U} to be mounted on the lower adapter 410_{L}, and the upper adapter 410_{U} and the lower adapter 410_{L} are to be rotatable with each other. For example, even if the lower adapter 410 _{L} is fixed and its rotation is locked, a state where the upper adapter 410_{U} is independently rotatable with respect to the lower adapter 410_{L} can be kept.

The adapter holder 420 is fixed to the upper portion of the leg section 300. The adapter holder 420 tiltably holds the adapter section 410. The lower surface of the lower adapter 410_{L} and the adapter holder 420 are formed in predetermined shapes in such a way that the lower adapter 410_{L} is held in the adapter holder 420 even if the lower adapter 410_{L} tilts to a predetermined angle. In the embodiment, as illustrated in FIG. 3, the lower surface of the lower adapter 410_{L} is formed in a hemispherical shape, and the adapter holder 420 has a shape like a bowl corresponding to the shape of that lower surface. Accordingly, the bowl-like shaped curved surface of the adapter holder 420 and the hemispherical curved surface of the lower adapter 410_{L} engage with each other as to contact with each other. An opening for allowing the lower sleeve 414 of the lower adapter 410_{L} to link downward, is formed in the bottom portion of the adapter holder 420. That is, by engaging the lower adapter 410_{L} with the adapter holder 420, with the lower sleeve 414 being inserted into the opening, the hemispherical curved surface of the lower adapter 410_{L} and the bowl-shaped curved surface of the adapter holder 420 are contacted with each other. As the hemispherical curved surface and the bowl-shaped curved surface are contacted with each other, the adapter holder 420 can tiltably hold the adapter section 410. It is desirable that the adapter section 410 should be structured so as to be easily slide by providing, for example, a slide assisting member like a ball bearing in between the lower adapter 410_{L} and the adapter holder 420.

The rotation locking section 41 comprises, for example, a screw member, and, the screw member is tightened, so that it engages with the protrusion 413. This engagement allows the protrusion 413 and the recess portion 412 to be contacted with each other, and the upper adapter 410_{U} and the lower adapter 410_{L} to be fixed or to be rotatable in an integral manner. Accordingly, when the lower adapter 410_{L} is fixed and its rotation is locked, the rotation of the upper adapter 410_{U} is also locked.

As the upper strut 210 and the lower strut 220 are connected to the adapter section 410 structured in this manner, the tripod device 1 is formed. As mentioned above, because the lower sleeve 414 of the lower adapter 410_{L} has a male-screw-like structure, and the recess portion 22, engaging with the lower sleeve 414, of the lower strut 220 has a female-screw-like structure, the tightening of the lower strut 220 in a rotational manner makes the lower adapter 410_{L} to be urged downward, so that it is fixed to the adapter holder 420 in a closely-contacted manner. Accordingly, the upper adapter 410_{U} integral with the lower adapter 410_{L} is also to be fixed. That is, when the adapter section 410 is fixed with the upper strut 210 and the lower strut 220 being connected to the adapter section 410, the tilt of the strut 200 is to be fixed.

When the tripod device 1 with such a structure is used, 1) the adapter section 410 is so engaged with the adapter holder 420 as to allow the lower sleeve 414 to link with the lower strut 220 downward through the opening of the adapter holder 420, 2)the rotation locking section 41 is tightened up, so that the rotation of the upper adapter 410_{U} is locked, 3)the lower strut 220 is connected to the lower sleeve 414, 4)the upper strut 210 is connected and fixed to the upper sleeve 411, 5)a camera is mounted on and fixed to the head 100, and 6)the weight section 500 is attached to the lower strut 220.

In this state, as the adapter section 410 is not fixed, the load of the weight section 500 stabilizes the strut 200 in the direction of gravitational force (that is, the direction vertical to the horizontal direction. Hereinafter, it is simply called "vertical direction" or "vertical"). Accordingly, for example, when a place (scaffolding), on which the tripod device 1 (leg section 300) is set, inclines, and the height of the ground plane of each leg differs, the strut 200 can be in the vertical state.

A user holds the upper strut 210 with the strut 200 being vertically stabilized, and tightens the lower strut 220 in a rotational manner. This tightening allows the lower strut 220 to push the lower portion of the adapter holder 420, and the adapter section 410 is fixed to the adapter holder 420. This results in the fixation of the tilt of the strut 200 in the vertical direction.

After the tilt of the strut 200 is fixed in the vertical direction, the upper adapter 410_{U} becomes rotatable as the rotation locking section 41 is released. Accordingly, the upper strut 210 connected to the upper adapter 410_{U} also becomes rotatable. That is, the user holds the upper strut 210 and moves around the tripod device 1 in a rotating manner, thereby rotating the upper strut 210. Therefore, the head 100 (furthermore, the camera mounted on the head 100) connected to the upper strut 210 can also become horizontally rotatable. Consequently, at the time of taking photographs all around, the head 100 is rotated to take photographs without tilting the strut 200 (that is, without tilting the strut 200 in the directions other than the vertical direction). In other words, the head 100 is rotated to take photographs while maintaining the constant longitudinal direction of the strut 200.

As explained above, according to the tripod device 1 of the above embodiment, as the head 100 can be rotated without tilting the strut 200, in a case such that a plurality of images are shot by shooting all around, a shooting can be carried out without misalignment on the heaven and earth. As the tripod device 1 of the above-described embodiment maintains the strut 200 in the direction of gravitational force (vertical direction) by the gravitational-directional load (that is, the weight of the tripod device 1 itself) due to the weight section 500, accessories such as a power source portion and a drive portion are not necessary, and thus the structure of the tripod device 1 can be very simple and lightened. As the strut 200 is divided into the upper strut 210 and the lower strut 220, the tripod device 1 can be highly portable.

In the above embodiment, although the structure of the adapter section 410, which have the lower adapter 410_{L} to be fixed, and the upper adapter 410_{U} rotatable with the lower adapter 410_{L} being fixed, is shown, but as long as the head 100 can be horizontally rotated with the tilt of the strut 200 being fixed, the structure of the adapter 410 is not limited to that. For example, the structure of the adapter 410 may be like one that the upper adapter 410_{U} is not rotatable when fixed to the adapter holder 420. In this case, for example, the upper strut 210 may be a double-cylinder structure, the outer cylinder thereof may be fixed to the adapter 410 to allow the inner cylinder to be rotatable so that the head 100 can be rotated. Or, the upper strut 210 may be structured as to be not rotatable, and in this case, for example, the head 100 itself may be structured as to be rotatably connected to the upper strut 210.

In the above embodiment, whilst the weight section 500 is so structured as to be attached to the lower strut 220, but as long as the gravitational-directional load can be applied to the lower strut 220, the method for applying that load to the lower strut 220 is not limited to that. For example, the lower strut 220 itself may be so structured as to have a mass corresponding to the weight of the weight section 500. In the above embodiment, whilst the weight section 500 is formed in a doughnut-like shape, but the shape of the weight section 500 and the method for attaching it to the lower strut 220 are optional. Moreover, the weight section 500 is not necessary to be the detachable structure, and it may be integrated with the lower strut 220. The lower strut 220 may not be a strut in a columnar shape as shown in the above embodiment, and, for example, the lower adapter 41_{U} and the weight section 500 may be connected by a wire or the like. That is, a structure such that the weight of the tripod deice 1 itself vertically stabilizes the strut 200 may be employed. The magnitude of the load applied to the strut 200 is optional. For example, when a relatively large load is required to vertically stabilize the strut 200, the tripod device 1 may include a means which can check the tilt state of the strut 200 (for example, a level) so that a user can finely adjusts the tilt of the strut 200 while confirming that tilt. In this case, as the weight section 500 has only to apply a load just for allowing the strut 200 to be in an approximately vertical state, the weight section 500 can be relatively lightened.

In the above embodiment, although it is structured that the strut 200 is divided into the upper strut 210 and the lower strut 220, and those are connected with each other via the adapter section 410, but it is not limited to such a structure, and, for example, the upper strut 210 and the lower strut 220 may be structured in an integral manner.

In the above embodiment, whilst the lower adapter 410_{L} is structured in such a manner as to be fixed to the adapter holder 420 by tightening up the lower strut 220, but as long as the tilt of the strut 200 can be fixed in the vertical direction, an arbitrary structure may be employed.

In the above embodiment, although the tripod device 1 with the leg section 300 as the three legs is explained as an example, but as long as the tilt adjustment section 400 is supported in such a manner as to bring out the above-described function of the tilt adjustment section 400, and the device can be stably set as a whole, the structure of the leg section 300 is optional. For example, the number of the legs may be other than "three". The shape of the leg section 300 is not limited to the leg-like shape, and may be other shapes such as a trapezoidal shape, a box shape, and a frame-like shape. In addition, the leg section 300 may include a movement means like a caster, and, it may be structured in such a manner that the strut 200 or the entire device is rotated by the caster.

As explained above, according to the invention, there is provide a panorama photographing support device which can conveniently shoot materials for making a high-quality panoramic motion picture.

### Industrial Applicability

The present invention is useful for manufacturing a panorama photographing support device.

The present invention is based on Japanese Patent Application No. 2003-70049 filed on March 14, 2003, and includes the specification, claims, drawings and abstract thereof. The disclosure of the application is hereby entirely incorporated in the present specification by reference.

## Claims

1. A panorama photographing support device comprising:
a head section which supports an imaging device;
a strut section which supports said head section; and
a leg section which supports said strut section,
**characterized by** further including:
load means which apply a load to said strut section in a direction of gravitational force; and
holding means which tiltably hold said strut section by the loading of said load means in such a way that tilt of said strut section is in the direction of gravitational force.

2. The panorama photographing support device according to claim 1, wherein said strut section and/or said holding means further includes fixing means which fix said strut section in a state where the tilting of said strut section is in the direction of gravitational force.

3. The panorama photographing support device according to claim 1, wherein
said strut section includes a first strut section and a second strut section, and
said holding means further includes:
a connecting section which connects said first strut section and said second strut section, and rotatably holds said first strut section; and
a housing section which is fixed to said leg section and tiltably houses said connecting section.

4. The panorama photographing support device according to claim 3, wherein said strut section and/or said holding means further includes fixing means which fix said connecting section in such a manner as to keep a state where the tilt of said strut section is in the direction of gravitational force.

5. The panorama photographing support device according to claim 3, wherein
said head section is attached to said first strut section, and
said load means is attached to said second strut section.

6. The panorama photographing support device according to claim 1, wherein
said strut section includes a first strut section and a second strut section,
said first strut section rotatably supports said head section, and
said holding means further includes:
a connecting section which connects said first strut section and said second strut section; and
a housing section which is fixed to said leg section and tiltably houses said connecting section.

7. The panorama photographing support device according to claim 6, wherein said strut section and/or said holding means further includes fixing means which fix said connecting section in such a manner as to keep a state where the tilt of said strut section is in the direction of gravitational force.

8. The panorama photographing support device according to claim 6, wherein
said head section is attached to said first strut section, and
said load means is attached to said second strut section.
